# EUROPÄISCHE PATENTSCHRIFT

(11) **EP 0 861 369 B1**
(45) Veröffentlichungstag und Bekanntmachung des Hinweises auf die Patenterteilung: **03.04.2002**
(21) Anmeldenummer: 97939950.8
(22) Anmeldetag: 09.08.1997
(51) Int. Cl.: F02B 17/00, F02B 23/10

(54) **BRENNKRAFTMASCHINE**
INTERNAL COMBUSTION ENGINE
MOTEUR A COMBUSTION INTERNE

(30) Priorität: 18.09.1996 DE 19638024
(43) Veröffentlichungstag der Anmeldung: 02.09.1998
(73) Patentinhaber: ROBERT BOSCH GMBH, 70442 Stuttgart (DE)
(72) Erfinder: BENEDIKT, Walter, D-70806 Kornwestheim (DE); HERDEN, Werner, D-70839 Gerlingen (DE); KÜSELL, Matthias, D-70806 Kornwestheim (DE)
(86) Internationale Anmeldenummer: DE9701699
(87) Internationale Veröffentlichungsnummer: WO9812426

(56) Entgegenhaltungen:
- EP-A- 0 412 008
- EP-A- 0 599 412
- EP-A- 0 768 457
- DE-A- 1 526 293
- DE-A- 2 038 098
- DE-A- 19 546 945
- FR-A- 2 216 439
- FR-A- 2 275 661
- FR-A- 2 359 281
- FR-A- 2 389 765
- US-A- 3 999 532
- US-A- 5 211 145

## Beschreibung

### Stand der Technik

Die Erfindung geht aus von einer Brennkraftmaschine, insbesondere für Kraftfahrzeuge, mit Kraftstoffdirekteinspritzung und Fremdzündung der im Oberbegriff des Anspruchs 1 definierten Gattung.

Bei solchen Brennkraftmaschinen hat die Kraftstoffdirekteinspritzung, d.h. die Einspritzung von Kraftstoff unmittelbar in den Brennraum und Ansaugen reiner Luft über das Einlaßventil, zum Ziel, eine hohe Vebrauchsreduktion durch Entdrosselung im Leerlauf und zumindest in der niedrigen Teillast zu erreichen. Hierzu ist es erforderlich, im Brennraum eine Ladungsschichtung aus einerseits einem homogenen, gut entflamm- und durchbrennbaren Kraftstoff-Luft-Gemisch und andererseits möglichst reiner Luft zu erreichen. Bisherige Direkteinspritzsysteme bewirken jedoch eine stark instationäre und ortsabhängige Gemischbildung im Brennraum.

Die FR-A-22 164 39 und die FR-A-23 89 765 offenbaren eine Brennkraftmaschine mit Kraftstoffdirekteinspritzung und Fremdzündung, die mindestens einen zwischen einem Zylinderkopf und einem in einer Zylinderbohrung verschieblichen Hubkolben eingeschlossenen Brennraum mit einer Kammer im Zylinderkopf aufweist, der mit mindestens einem Einlassventil zur Luftansaugung verschließbar ist, wobei dem Brennraum an dessen oberen Ende eine zum Brennraum hin sich öffnende Kammer mit gegenüber dem Brennraum wesentlich kleinerem, zum Brennraum hin sich stetig vergrößerndem, lichten Querschnitt vorgelagert ist, in welcher Kammer Einspritzung und Zündung erfolgen.

Um generell dem Problem der Inhomogenität innerhalb der Gemischwolke entgegenzuwirken, ist man bei einer anderen bekannten Brennkraftmaschine auf die Einblasung eines Kraftstoff-Luft-Gemisches in den Brennraum übergegangen (DE-A-39 20 089). Hierbei sind eine Einspritzdüse für ein Kraftstoff-Luft-Gemisch und eine zugehörige Zündkerze, die im Zylinderkopf angeordnet sind, einander so zugeordnet, daß die Einspritzdüse auf den Freiraum zwischen den in den Brennraum hineinragenden beiden Zündelektroden der Zündkerze, in dem die Zündfunken auftreten, ausgerichtet ist und in Spritzrichtung der Einspritzdüse hinter den Elektroden das Zentrum des Brennraums liegt.

### Vorteile der Erfindung

Die erfindungsgemäße Brennkraftmaschine mit den kennzeichnenden Merkmalen des Anspruchs 1 hat den Vorteil, daß bei Beibehaltung der Direkteinspritzung von reinem Kraftstoff eine weitgehende Homogenität der Gemischbildung bis zur Zündung erreicht wird, womit ein sicheres Durchbrennen gewährleistet ist. Dabei ergibt sich ein besonders günstiges Übergangsverhalten von Leerlauf zu Teillast und von Teillast zu Vollast. Gleichzeitig zeigen sich Vorteile, insbesondere die Überwindung von Flammkernbildungsproblemen, beim homogenen Magerbetrieb oder beim Betrieb mit Abgasrückführung. Durch die Mulde bilden sich zwischen den einander gegenüberliegenden Stirnflächen von Hubkolben und Zylinderwand bei der Aufwärtsbewegung des Hubkolbens von seinem unteren zu seinem oberen Totpunkt Quetschspalten aus, durch die definiert Luft in die Kammer einströmt und die Gemischaufbereitung unterstützt.

Durch die in den weiteren Ansprüchen aufgeführten Maßnahmen sind vorteilhafte Weiterbildungen und Verbesserungen der im Anspruch 1 angegebenen Brennkraftmaschine möglich.

Gemäß einer bevorzugten Ausführungsform der Erfindung ist die Kammer glockenförmig ausgebildet und ihr Volumen beträgt ca. 30 - 50% des im oberen Totpunkt des Hubkolbens vorhandenen minimalen Brennraumvolumens. Hierdurch wird erreicht, daß ausgehend vom Leerlauf mit zunehmender Last ein in Richtung Glockenkopf stetig wachsender Volumenbereich der Kammer mit homogenem, brennbarem Gemisch gefüllt wird.

Gemäß einer weiteren Ausführungsform der Erfindung ist die Kraftstoffeinspritzung so gesteuert, daß eine Kraftstoff-Luft-Gemischbildung bei Leerlauf und unterer Teillast in der Kammer und bei oberer Teillast und Vollast in Kammer und Brennraum erfolgt. Durch diese Festlegung eines Einspritzzeitfenster kann die Gemischhomogenität bis zum Zündzeitpunkt beeinflußt und die Gemischbildung so gesteuert werden, daß sie entweder in der Kammer oder in der Kammer und im Brennraum erfolgt und dort entweder eine Ladungsschichtung oder eine homogene Gemischbildung erreicht wird. Dieses Einspritzfenster ist ebenso wie der Zündzeitpunkt abhängig von Last und Drehzahl der Brennkraftmaschine mittels Kennfeld steuerbar oder über ein "feed-back" aus dem Brennraum mittels Brennraumdrucksensoren regelbar.

Gemäß einer bevorzugten Ausführungsform der Erfindung erfolgt die Steuerung des Einspritzzeitfensters bevorzugt in der Weise, daß bei Leerlauf und unterer Teillast eine entsprechend kleine Kraftstoffmenge dann eingespritzt wird, wenn sich der Hubkolben etwa in seinem unteren Totpunkt befindet, und daß bei oberer Teillast und Vollast eine entsprechend große Kraftstoffmenge dann eingespritzt wird, wenn sich der Hubkolben im Ansaugtakt aus seinem oberen Totpunkt heraus abwärts bewegt. Durch die erfindungsgemäß vorgesehene Kammer wird dabei bei Leerlauf und unterer Teillast eine Ladungsschichtung erreicht, die einerseits eine Homogenität der Gemischbildung über ca. 180° Kurbelwellenwinkel ermöglicht und andererseits eine breite Vermischung des Kraftstoffs mit der restlichen Luft im Brennraum verhindert. Bei oberer Teillast und Vollast vermischt sich demgegenüber der Kraftstoff aus der Kammer heraus mit der Brennraumfüllung über 360° Kurbelwellenwinkel und ist bis zum Zündzeitpunkt weitgehend homogen vermischt.

Unterstützt wird dieses Verhalten, wenn gemäß einer weiteren Ausführungsform der Erfindung die Einspritzdüse in der Reichweite und/oder im Querschnitt ihres Einspritzstrahls steuerbar ausgebildet ist. Bei Leerlauf und unterer Teillast wird dabei eine kurze Reichweite und ein breiter Querschnitt des Einspritzstrahls und bei oberer Teillast und Vollast eine große Reichweite und ein schmaler Querschnitt des Einspritzstrahls eingestellt.

Gemäß einer vorteilhaften Ausführungsform der Erfindung sind die zur Kraftstoffeinspritzung und Zündung erforderlichen Einspritzdüse und Zündkerze mit Zündelektroden, die im Zylinderkopf angeordnet sind, relativ zueinander so angeordnet, daß die in die Kammer hineinragenden Elektroden der Zündkerze außerhalb des Spritzstrahls der Einspritzdüse liegen. Dadurch wird bei der Kraftstoffeinspritzung die Zündkerze nicht angespritzt, so daß kein Thermoschock für Kerzenstein und Elektroden auftritt und sich auch keine Ablagerungen auf dem Kerzenstein bilden. Damit wächst die Lebensdauer der Zündkerze.

Gemäß alternativen Ausführungsformen der Erfindung können Zündkerze und Einspritzdüse sowohl zu einer Baueinheit zusammengefaßt sein, die wechselbar in dem Zylinderkopf einsetzbar ist, als auch separat in dafür vorgesehene Bohrungen in den Zylinderkopf eingesetzt werden. Die Anordnung von Zündkerze und Einspritzdüse kann dabei bi- oder koaxial erfolgen, wobei bei der koaxialen Anordnung die Spritzöffnung der Einspritzdüse zentral liegt.

### Zeichnung

Die Erfindung ist anhand von in der Zeichnung dargestellten Ausführungsbeispielen in der nachfolgenden Beschreibung näher erläutert. Dabei zeigen in schematischer Darstellung:
- Fig. 1: ausschnittweise einen Längsschnitt eines Motorblocks einer Brennkraftmaschine mit Kraftstoffdirekteinspritzung und Fremdzündung,
- Fig. 2, 3: eine gleiche Darstellung wie in Fig. 1 wobei diese jedoch kein Ausführunngsbeispiel zeigen.

### Beschreibung der Ausführungsbeispiele

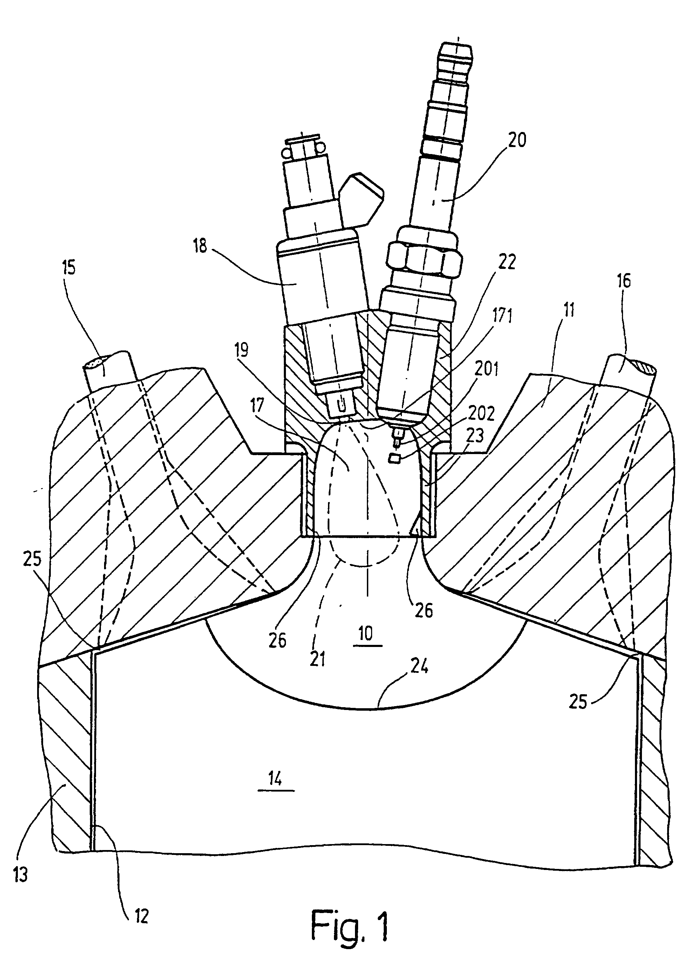

Die in Fig. 1 auszugsweise im Längsschnitt dargestellte Brennkraftmaschine für Kraftfahrzeuge mit Kraftstoffdirekteinspritzung und Fremdzündung weist einen Brennraum 10 auf, der zwischen einem Zylinderkopf 11 und einem in einer Zylinderbohrung 12 eines Motorblocks 13 verschieblichen Hubkolben 14 eingeschlossen ist. Der Hubkolben 14 führt im Betrieb der Brennkraftmaschine in der Zylinderbohrung 12 eine Auf- und Abbewegung zwischen einem unteren und oberen Totpunkt aus und ist über eine nicht dargestellte Pleuelstange mit einer hier nicht dargestellten Kurbelwelle verbunden. In dem Zylinderkopf 11 ist mindestens ein Einlaßventil 15 und mindestens ein Auslaßventil 16 zur Steuerung des Gaswechsels der Brennkraftmaschine vorgesehen. Das Einlaßventil 15 steht mit einem Luftansaugrohr in Verbindung, während das Auslaßventil 16 an die Abgasanlage angeschlossen ist. Dem Brennraum 10 ist eine Kammer 17 vorgelagert, die achssymmetrisch im Zylinderkopf 11 eingearbeitet ist. Der lichte Querschnitt der zwischen den Ventilen 15,16 mittig angeordneten Kammer 17 ist wesentlich kleiner als der der Zylinderbohrung 12 und nimmt zum Brennraum 10 hin ständig zu. Bevorzugt wird die Kammer 17 glockenförmig ausgebildet, wodurch sichergestellt ist, daß der lichte Querschnitt, ausgehend vom Glockenboden 171 oder Glockenkopf bis hin zur Glockenöffnung kontinuierlich zunimmt.

Im Zylinderkopf 11 ist eine elektromagnetisch gesteuerte Einspritzdüse 18 zur Kraftstoffeinspritzung so eingesetzt, daß ihre Einspritzöffnung 19 im Glockenboden 171 der Kammer 17 mündet. Im Zylinderkopf 11 ist weiterhin eine Zündkerze 20 so eingesetzt, daß ihre beiden Zündelektroden 201 und 202 in die Kammer 17 hineinragen. Einspritzdüse 18 und Zündkerze 19 sind biaxial angeordnet, wobei die Achsen zueinander so geneigt sind, daß die beiden Zündelektroden 201 und 202 außerhalb des von der Einspritzdüse 18 in die Kammer 17 eingespritzten Spritzstrahls 21 liegen. Um eine korrekte Ausrichtung der Achsen von Einspritzdüse 18 und Zündkerze 20 sicherzustellen, sind beide mit einem Einschraubkopf 22 zu einer Baueinheit zusammengefaßt und können nur gemeinsam durch Ein- oder Ausschrauben des Einschraubkopfes 22 in eine entsprechende Gewindebohrung 23 im Zylinderkopf 11 gewechselt werden. Das Volumen der glockenförmigen Kammer 17 beträgt ca. 30 - 50% des im oberen Totpunkt des Hubkolbens 14 vorhandenen, minimalen Brennraumvolumens. Dieses glockenförmige Kammervolumen wird durch eine in die Stirnwand des Hubkolbens 10 annähernd symmetrisch eingebrachte Mulde 24 zur Birnenform ergänzt.

Bei der Aufwärtsbewegung des Hubkolbens 14 von seinem unteren Totpunkt in seinen in Fig. 1 dargestellten oberen Totpunkt bilden sich zwischen den einander gegenüberliegenden Stirnflächen von Hubkolben 14 und Zylinderkopf 11 Quetschspalten 25 aus, durch die definiert Luft in die Kammer 17 einströmt und die Gemischaufbereitung unterstützt. Verbessert wird die Gemischaufbereitung durch in der Kammer 17 angeordnete Wirbelkanten 26, durch welche eine Erhöhung der Turbulenzintensität bewirkt wird.

Im Betrieb der Brennkraftmaschine wird durch eine hier nicht dargestellte Steuereinrichtung mittels der Einspritzdüse 18 ein Einspritzzeitfenster erzeugt, über das gesteuert wird, ob die Gemischbildung nur in der Kammer 17 mit Ladungsschichtung, wie dies für Leerlauf oder unterer Teillast gewünscht ist, oder im gesamten Brennraum 10 mit homogener Gemischbildung erfolgt, wie dies bei oberer Teillast und Vollast angestrebt wird. Die Wahl des Einspritzzeitfensters ist dabei unabhängig von der Festlegung des Zündzeitpunktes durch die Zündkerze 20 möglich.

Mittels dieses Einspritzzeitfensters wird bei Leerlauf und unterer Teillast eine entsprechend kleine Kraftstoffmenge eingespritzt, wenn sich der Hubkolben 14 etwa in seinem unteren Totpunkt befindet. Wie bereits erwähnt, erfolgt die Einspritzung in die Kammer 17, wobei die Zündkerze 20 nicht angespritzt wird. In der Verdichtungsphase, wenn sich also der Hubkolben 14 von seinem unteren Totpunkt zu seinem oberen Totpunkt bewegt, strömt die angesaugte verwirbelte Luft in die Kammer 17 ein und bildet ein gut zündfähiges, homogenes Gemisch ausschließlich innerhalb der Kammer 17.

Bei höheren Lasten und Vollast wird schon in der Ansaugphase, also bei sich abwärtsbewegendem Hubkolben 14, eine entsprechend große Kraftstoffmenge eingespritzt, so daß sich der Kraftstoff aus der Kammer 17 heraus mit der Brennraumfüllung über ca. 360° Kurbelwellenwinkel bis zum Zündzeitpunkt weitgehend homogen vermischt. Im homogenen Magerbetrieb oder bei Betrieb mit Abgasrückführung wird zusätzlich nochmals eine geringe Kraftstoffmenge im Bereich des unteren Totpunktes des Hubkolbens 14 eingespritzt, damit zum Zündzeitpunkt in der Kammer 17 ein etwa stöchiometrisches Gemisch vorhanden ist. Dadurch kann eine schwache Schichtung aus gut entflammbarem Gemisch in der Kammer 17 und sehr magerem Gemisch im Brennraum 10 erreicht werden, mit dem Vorteil, daß die ausgedehnte, energiereiche Flammfront in der Kammer 17 das magere Gemisch im Brennraum 10 sicher entflammen kann.

Hilfreich ist es, wenn zusätzlich die Einspritzdüse 18 so ausgebildet ist, daß ihr Einspritzstrahl in Reichweite und/oder im Querschnitt steuerbar ausgebildet ist. Bei Leerlauf und unterer Teillast würde dann ein Einspritzstrahl mit kurzer Reichweite und breitem Querschnitt und bei oberer Teillast und Vollast ein Einspritzstrahl mit großer Reichweite und schmalem Querschnitt eingestellt werden.

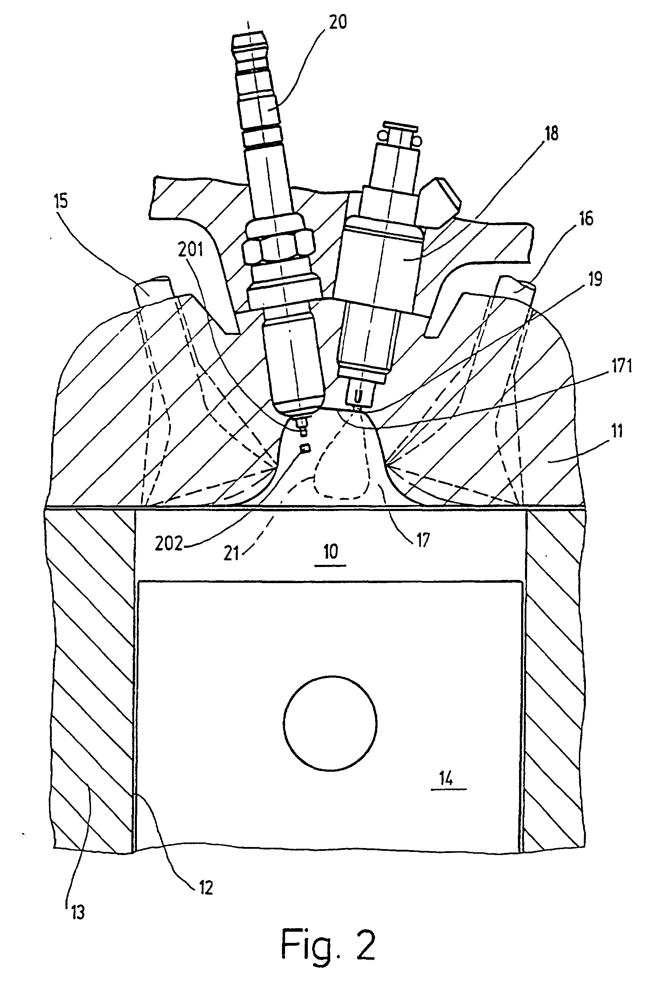

Die in Fig. 2 ausschnittweise im Längsschnitt dargestellte Brennkraftmaschine ist gegenüber der vorstehend beschriebenen Brennkraftmaschine nur wenig modifiziert. Hier sind Einspritzdüse 18 und Zündkerze 20 nicht zu einer Montagebaueinheit zusammengefaßt, sondern werden getrennt in den Zylinderkopf 11 eingesetzt. Des weiteren weist der Hubkolben 14 eine rechtwinklig zur Verschiebebewegung ausgerichtete ebene Stirnfläche zur Begrenzung des Brennraums 10 auf und auf die Ausbildung einer Mulde in seiner den Brennraum 10 begrenzenden Stirnwand ist verzichtet. Im übrigen stimmen Aufbau und Wirkungsweise mit der zu Fig. 1 beschriebenen Brennkraftmaschine überein.

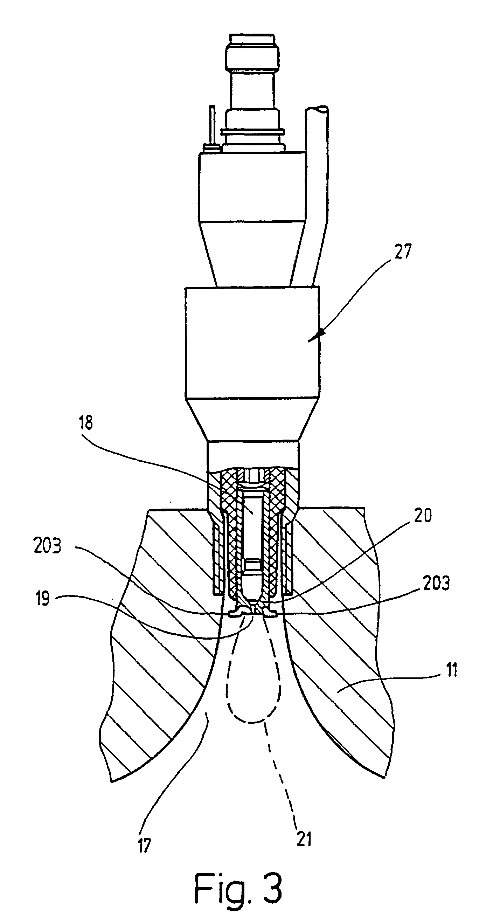

Die ausschnittsweise und teilweise geschnitten dargestellte Brennkraftmaschine gemäß Fig. 3 verdeutlicht nunmehr, daß Einspritzdüse 18 und Zündkerze 20 koaxial angeordnet werden können und dabei eine Baueinheit bilden. Die Einspritzöffnung 19 der Einspritzdüse 18 ist zentral angeordnet, und die Zündkerze 20 trägt nur Mittelelektroden 203. Die Zündung erfolgt gegen die Wand der Kammer 17 und damit wiederum außerhalb des von der zentralen Einspritzöffnung 19 ausgehenden Spritzstrahls 21.

## Patentansprüche

1. Brennkraftmaschine, insbesondere für Kraftfahrzeuge, mit Kraftstoffdirekteinspritzung und Fremdzündung, die mindestens einen zwischen einem Zylinderkopf (11) und einem in einer Zylinderbohrung (12) verschieblichen Hubkolben (14) eingeschlossenen Brennraum (10) aufweist, der mit mindestens einem Einlaßventil (15) zur Luftansaugung verschließbar ist, wobei dem Brennraum (10) an dessen oberen Ende eine zum Brennraum (10) hin sich öffnende Kammer (17) mit gegenüber dem Brennraum (10) wesentlich kleinerem, zum Brennraum (10) hin sich stetig vergrößerndem, lichtem Querschnitt vorgelagert ist und Einspritzung und Zündung in der Kammer (17) erfolgen, **dadurch gekennzeichnet, daß** in der den Brennraum (10) begrenzenden Stirnwand des Hubkolbens (14) eine annähernd symmetrische Mulde (24) mittig eingeformt ist, die die Glockenform der Kammer (17) zusammen mit dem Brennraum (10) zu einer Birnenform ergänzt.

2. Brennkraftmaschine nach Anspruch 1, **dadurch gekennzeichnet, daß** die Kammer (17) glockenförmig ausgebildet ist und ihr Volumen ca. 30 - 50% des im oberen Totpunkt des Hubkolbens (14) vorhandenen minimalen Brennraumvolumens beträgt.

3. Brennkraftmaschine nach Anspruch 1 oder 2, **dadurch gekennzeichnet, daß** die Kammer (17) im Zylinderkopf (11) ausgebildet ist.

4. Brennkraftmaschine nach einem der Ansprüche 1 - 3, **dadurch gekennzeichnet, daß** in der Kammer (17) Wirbelkanten (26) für die Verwirbelung von Kraftstoff und Luft vorgesehen sind.

5. Brennkraftmaschine nach einem der Ansprüche 1 - 4, **dadurch gekennzeichnet, daß** die Kraftstoffeinspritzung so gesteuert ist, daß eine Kraftstoff-Luft-Gemischbildung bei Leerlauf und unterer Teillast in der Kammer (17) und bei oberer Teillast und Vollast in der Kammer (17) und im Brennraum (10) erfolgt.

6. Brennkraftmaschine nach Anspruch 5, **dadurch gekennzeichnet, daß** bei Leerlauf und unterer Teillast eine entsprechend kleine Kraftstoffmenge eingespritzt wird, wenn sich der Hubkolben (10) etwa in seinem unteren Totpunkt befindet, und daß bei oberer Teillast und Vollast eine entsprechend große Kraftstoffmenge eingespritzt wird, wenn sich der Hubkolben (14) im Ansaugtakt aus seinem oberen Totpunkt heraus abwärts bewegt.

7. Brennkraftmaschine nach Anspruch 6, **dadurch gekennzeichnet, daß** im homogenen Magerbetrieb oder bei Betrieb mit Abgasrückführung bei oberer Teillast und Vollast eine weitere kleine Kraftstoffmenge eingespritz wird, wenn sich der Hubkolben (14) etwa in seinem unteren Totpunkt befindet.

8. Brennkraftmaschine nach einem der Ansprüche 1 - 7, mit einer Einspritzdüse (18) für die Kraftstoffeinspritzung und einer Zündelektrode (201,202) aufweisenden Zündkerze (20) für die Zündung, die im Zylinderkopf (11) angeordnet sind, **dadurch gekennzeichnet, daß** Zündkerze (20) und Einspritzdüse (18) so ausgerichtet sind, daß die in die Kammer (17) hineinragenden Zündelektroden (201,202) außerhalb des Spritzstrahls (21) der Einspritzdüse (18) liegen.

9. Brennkraftmaschine nach Anspruch 8, **dadurch gekennzeichnet, daß** Zündkerze (20) und Einspritzdüse (18) zu einer Baueinheit (22) zusammengefaßt sind, die wechselbar in den Zylinderkopf (11) eingesetzt ist.

10. Brennkraftmaschine nach Anspruch 8 oder 9, **dadurch gekennzeichnet, daß** Zündkerze (20) und Einspritzdüse (18) bi- oder koaxial angeordnet sind.

11. Brennkraftmaschine nach Anspruch 10, **dadurch gekennzeichnet, daß** bei koaxialer Anordnung von Zündkerze (20) und Einspritzdüse (18) die Spritzöffnung (19) der Einspritzdüse (18) zentral angeordnet ist.

12. Brennkraftmaschine nach einem der Ansprüche 8 - 11, **dadurch gekennzeichnet, daß** die Einspritzdüse (18) in der Reichweite und/oder im Querschnitt ihres Einspritzstrahls (21) steuerbar ausgebildet ist und daß bei Leerlauf und unterer Teillast eine kurze Reichweite und ein breiter Querschnitt und bei oberer Teillast und Vollast eine lange Reichweite und ein schmaler Querschnitt des Einspritzstrahls (21) eingestellt wird.

## Claims

1. Internal combustion engine, in particular for motor vehicles, with direct fuel injection and applied ignition, which has at least one combustion space (10), which is enclosed between a cylinder head (11) and a reciprocating piston (14) that can be displaced in a cylinder bore (12) and which can be closed by at least one inlet valve (15) for air induction, a chamber (17) that opens towards the combustion space (10) and has a clear cross section that is significantly smaller than that of the combustion space (10) and increases continuously towards the combustion space (10) being arranged ahead of the combustion space (10), at the upper end of the latter, and injection and ignition taking place in the chamber (17), **characterized in that** the end wall of the reciprocating piston (14) that bounds the combustion space (10) has formed centrally in it an approximately symmetrical recess (24) which, together with the combustion space (10), supplements the bell shape of the chamber (17) to give a pear shape.

2. Internal combustion engine according to Claim 1, **characterized in that** the chamber (17) is of bell-shaped design and its volume is about 30-50% of the minimum combustion-space volume present at top dead centre of the reciprocating piston (14).

3. Internal combustion engine according to Claim 1 or 2, **characterized in that** the chamber (17) is formed in the cylinder head (11).

4. Internal combustion engine according to one of Claims 1 to 3, **characterized in that** swirl edges (26) for swirling fuel and air are provided in the chamber (17).

5. Internal combustion engine according to one of Claims 1 to 4, **characterized in that** fuel injection is controlled in such a way that formation of a fuel/air mixture takes place in the chamber (17) at idle and in the lower part-load range and in the chamber (17) and in the combustion space (10) in the upper part-load range and at full load.

6. Internal combustion engine according to Claim 5, **characterized in that**, at idle and in the lower part-load range, a correspondingly small quantity of fuel is injected when the reciprocating piston (10) is approximately at its bottom dead centre, and **in that**, in the upper part-load range and at full load, a correspondingly large quantity of fuel is injected when the reciprocating piston (14) is moving down from its top dead centre during the intake stroke.

7. Internal combustion engine according to Claim 6, **characterized in that** a further small quantity of fuel is injected during homogeneous lean-mixture operation or during operation with exhaust-gas recirculation in the upper part-load range and at full load when the reciprocating piston (14) is approximately at its bottom dead centre.

8. Internal combustion engine according to one of Claims 1 to 7, with an injector (18) for fuel injection and a spark plug (20) for ignition, having ignition electrodes (201, 202), which are arranged in the cylinder head (11), **characterized in that** the spark plug (20) and the injector (18) are aligned in such a way that the ignition electrodes (201, 202) projecting into the chamber (17) lie outside the injection jet (21) of the injector (18).

9. Internal combustion engine according to Claim 8, **characterized in that** the spark plug (20) and the injector (18) are combined into a modular unit (22), which is inserted replaceably into the cylinder head (11).

10. Internal combustion engine according to Claim 8 or 9, **characterized in that** the spark plug (20) and the injector (18) are arranged biaxially or coaxially.

11. Internal combustion engine according to Claim 10, **characterized in that**, in the case where the spark plug (20) and the injector (18) are arranged coaxially, the injection opening (19) of the injector (18) is arranged centrally.

12. Internal combustion engine according to one of Claims 8 to 11, **characterized in that** the injector (18) is designed in such a way that the range and/or cross section of its injection jet (21) is controllable, and **in that** a short range and a broad cross section of the injection jet (21) is set at idle and in the lower part-load range and a long range and a narrow cross section of the injection jet (21) is set in the upper part-load range and at full load.

## Revendications

1. Moteur à combustion interne notamment de véhicule automobile comprenant un système d'injection directe de carburant et un allumage non commandé, avec au moins des pistons à mouvement alternatif (14) coulissant dans une chambre de combustion (10) délimitée entre un alésage de cylindre (12) et une culasse (11), cette chambre pouvant être fermée par une soupape d'admission (15) pour l'aspiration de l'air, l'extrémité supérieure de la chambre de combustion (10) ayant une chambre (17) s'ouvrant en direction de la chambre de combustion (10) avec une section libre beaucoup plus petite que celle de la chambre de combustion (10) et s'agrandissant de manière continue vers la chambre de combustion (10), l'injection et l'allumage se faisant dans la chambre (17),
**caractérisé en ce que**
la paroi du dessus du piston (14) délimitant la chambre de combustion (10) comporte une cuvette (24) centrale, sensiblement symétrique, qui complète la forme de cloche de la chambre (17) avec la chambre de combustion pour aboutir à une forme de poire.

2. Moteur à combustion interne selon la revendication 1,
**caractérisé en ce que**
la chambre (17) est en forme de cloche et son volume représente environ 30-50 % du volume minimum de la chambre de combustion lorsque le piston (14) est au point mort haut.

3. Moteur à combustion interne selon l'une quelconque des revendications 1 ou 2,
**caractérisé en ce que**
la chambre (17) est réalisée dans la culasse (11).

4. Moteur à combustion interne selon la revendication 3,
**caractérisé en ce que**
la chambre (17) comporte des arêtes de turbulence (26) pour mettre en turbulence le carburant et l'air.

5. Moteur à combustion interne selon l'une quelconque des revendications 1 à 4,
**caractérisé en ce que**
l'injection de carburant est commandée pour former le mélange carburant/air dans la chambre (17), au ralenti et pour la zone inférieure de la charge partielle, ce mélange se formant dans la chambre (17) et la chambre de combustion (10) pour la zone supérieure de la charge partielle et la charge maximale.

6. Moteur à combustion interne selon la revendication 5,
**caractérisé en ce qu'**
au ralenti et dans la zone de charge partielle inférieure, on injecte une quantité de carburant faible lorsque le piston (10) se trouve sensiblement à son point mort bas et
pour la zone de charge partielle supérieure et de pleine charge, on injecte une quantité importante de carburant lorsque le piston (14) se trouve en phase d'aspiration en s'écartant de son point mort haut.

7. Moteur à combustion interne selon la revendication 6,
**caractérisé en ce qu'**
en mode maigre homogène ou en mode avec réinjection des gaz d'échappement pour la zone supérieure de charge partielle et la charge maximale on injecte toujours une petite quantité de carburant lorsque le piston (14) se trouve sensiblement à son point mort bas.

8. Moteur à combustion interne selon l'une quelconque des revendications 1 à 7, comprenant un injecteur (18) pour injecter le carburant et une bougie d'allumage (20) avec des électrodes d'allumage (201, 202), installés dans la culasse (11),
**caractérisé en ce que**
la bougie d'allumage (20) et l'injecteur (10) sont dirigés pour que les électrodes d'allumage (201, 202) pénétrant dans la chambre (17) se trouvent en dehors du jet (21) de l'injecteur (18).

9. Moteur à combustion interne selon la revendication 8,
**caractérisé en ce que**
la bougie d'allumage (20) et l'injecteur (18) sont regroupés en un ensemble (22) installé de manière interchangeable dans la culasse (11).

10. Moteur à combustion interne selon la revendication 8,
**caractérisé en ce que**
la bougie d'allumage (20) et l'injecteur (18) sont installés de manière coaxiale ou biaxiale.

11. Moteur à combustion interne selon la revendication 10,
**caractérisé en ce que**
dans le cas d'un montage coaxial de la bougie d'allumage (20) et de l'injecteur (18), l'orifice d'éjection (19) de l'injecteur (18) est central.

12. Moteur à combustion interne selon l'une quelconque des revendications 8 à 11,
**caractérisé en ce que**
l'injecteur (18) est commandé en portée et/ou en section de son jet d'injection (21) et
au ralenti et dans la zone inférieure de la charge partielle on règle une courte portée et une section large alors que pour la zone supérieure de charge partielle et la pleine charge on règle une portée longue et une section étroite du jet d'injection (21).
